**Europäisches Patentamt**

**European Patent Office**

**Office européen des brevets**

(19)

(11) Publication number: **0 196 833**

**A2**

(12) **EUROPEAN PATENT APPLICATION**

(21) Application number: **86302065.7**

(22) Date of filing: **20.03.86**

(51) Int. Cl.⁴: **B 62 D 33/04**
**B 60 P 3/20**

(30) Priority: **21.03.85 GB 8507366**
**18.06.85 GB 8515057**

(43) Date of publication of application:
**08.10.86 Bulletin 86/41**

(84) Designated Contracting States:
**AT BE CH DE FR IT LI LU NL SE**

(71) Applicant: **Tidd Strongbox Limited**
**Sunderland Road**
**Sandy Bedforfdshire(GB)**

(72) Inventor: **Tidd, Hector**
**26 Bath Court**
**Hove Sussex(GB)**

(74) Representative: **Nash, Keith Wilfrid et al,**
**KEITH W. NASH & Co. Pearl Assurance House 90-92**
**Regent Street**
**Cambridge CB2 1DP(GB)**

(54) **Vehicle body.**

(57) A road goods vehicle body 10 is divided by a horizontal partition 22 into upper and lower compartments. Either or both compartments may be sub-divided into sub-compartments by part or full height vertical dividers 28, 30, 32, 34. Preferably at least some of the dividers are thermally insulating and at least some of the compartments or sub-compartments can be environmentally controlled independently others.

The rigifying effect of the dividers on the vehicle body can increase its strength.

Preferably the compartments have guide means and drive means for movable load carrying units used to carry load items within the vehicle body.

Fig.3

EP 0 196 833 A2

- 1 -

C211/T

**Title:** **Vehicle Body**

**DESCRIPTION.**

**Field of invention.**

This invention concerns vehicle bodies such as articulated trailers, trailed units and integral van bodies.

**Background to the invention.**

Conventional vehicle bodies comprise rectilinear compartments into which loads are introduced, normally from the rear. If refrigeration or environmental control is required, the interior of the compartment can be sealed, normally by means of doors or flaps.

It is known to mount refrigerating or other environmental control equipment either within the compartment or adjacent thereto, so that the equipment can operate once the compartment has been loaded to maintain the temperature and/or humidity in the compartment at controlled levels.

It is an object of the present invention to provide an improved vehicle body for carrying multiple loads and to provide for flexibility in environmental control within the load carrying compartment to allow carriage within the same compartment of loads which require different environmental conditions.

In another embodiment the invention can provide a stronger load carrying compartment than hitherto.

In yet another embodiment, the invention can provide a load carrying vehicle body into which smaller load carrying members such as pallets or bins can be loaded more readily than hitherto.

In a further embodiment, as a result of the easier loading, the invention can improve the packing density and load carrying capacity of vehicle bodies of the type before mentioned.

Summary of the invention.

According to a first aspect of the present invention, in a load carrying vehicle body the interior of the body is divided into an upper and a lower compartment by means of at least one internal horizontal floor.

The vehicle body may include means for controlling the environment such as temperature or humidity or both within one of the compartments relative to the other.

Alternatively means may be provided for independently controlling the environment of each of the two compartments so that for example both may be refrigerated but one to a greater extent than the other or one may be heated and the other refrigerated.

At least one of the two compartments so formed may be sub-divided internally by at least one vertical separator or partition.

The invention envisages a number of variations of this sub-division and within the scope of the invention are the following arrangements.

1) Sub-division of the upper compartment and no sub-division of the lower compartment.

2) Sub-division of the lower compartment but no sub-division of the upper compartment.

3) Sub-division of both upper and lower compartments.

By sub-division is meant the dividing of the upper or lower compartment into two or three or more sub-compartments side by side which may be of the same or different sizes and cross sections. Preferably the sub-compartments on any one deck are all of the same cross section and size.

The separators may simply be curtains suspended from the roof of each compartment. The curtains should be sufficiently robust to prevent interference between load carrying units in adjacent lanes which might prevent one device in one lane from being moved past another device in an adjacent lane. The curtains could for example be sheets of polypropylene and can be mounted on tracks so that they can be drawn back, or removed entirely.

The curtains need not extend the full height of the compartments. Suitably the curtains could hang down 56-70% of the compartment height.

- 4 -

If the curtains do extend the full height, they may be attached at both roof and floor of the compartments.

The separators can however be rigid partitions.

If curtains are used, each lane preferably also has guides for guiding the load carrying units longitudinally along the lanes. Such guides may also be used if the separators are rigid partitions.

According to a second aspect of the invention, where the interior of the body is not only divided into upper and lower compartments but one or both of the latter are also sub-divided by means of upright partitions, means is provided for controlling the environment within at least one of the sub-compartments and preferably in some or all of the sub-compartments so that total environmental control within the whole of the interior of the body is possible, with each sub-compartment being independently controlled relative to all of the other sub-compartments.

Where significant temperature differentials are envisaged, it is of course essential that the internal dividing walls have suitable thermal insulation.

Where the load carrying compartment must be kept clean, the surfaces of the sub-compartments i.e. the walls floors and ceilings are preferably covered by wipe clean surface material in known manner.

According to a third aspect of the invention, where the body is divided into upper and lower compartments, guide means is provided in one or other of the compartments (or both) to assist in receiving and guiding therein load carrying units such as roll pallets, trucks, wheeled containers or mobile bins which are typically dimensioned so as to be a snug fit laterally in the compartment into which they are fitted and which are further dimensioned so that a discrete number of such load carrying units can be fitted in a line from the front to the back of the load carrying compartment to just occupy the whole length of the compartment available to them.

Where the upper or lower or both compartments are sub-divided into two or three or more sub-compartments or lanes as aforesaid, the invention lends itself to the use of a large number of relatively small load carrying units each of which is independently movable into a line with other such devices in one or other of the lanes. By suitable dimensioning of the lanes and suitable spacing between vertical sub-dividing partitions and spacing between floors and "ceilings" and by appropriate choice of dimensions for the load carrying units which can be independently fitted into the lanes in lines, so a vehicle can be loaded with a large number of load carrying units in the said lines along the lanes. This is of particular advantage where individual load carrying units are to be offloaded at different points. It is then merely necessary for the operator to load the load carrying compartment with the things which are to be offloaded last at the front ends of the lanes and the things which are to be offloaded first at the rear of the lanes. By removing the units making up the first drop, the units which are to be left at the second drop are then exposed and so on.

It is a simple matter to trundle the units along the lanes to allow them to be unloaded from the rear of the compartment.

The invention envisages the use of power means for moving the load carrying units along the lanes for both loading and unloading purposes.

Preferably means is provided for locking the devices at any stowed position so as to prevent the devices from being free to move in a fore and aft direction within the load carrying compartment.

It has been found that standard roll pallets having a dimension of little less than 1 metre can be accommodated three across in the width of a standard trailer for U.K. roads. By dividing the interior of a 3 to 4 metre high trailer into upper and lower compartments and sub-dividing the compartments into three lanes each, making six lanes in all, so a large number of roll pallets can be accommodated in one trailer with a very high packing density.

Not only has packing density improved but so also has the facility for loading and unloading the compartment. It is not necessary for each load carrying unit that is inserted into the vehicle body to be full and this is of great advantage particularly where for example the load which is to be dropped at the last drop on the route is made up of a number of items which have to be kept separate, possibly at different temperature or different humidity and which can vary in quantity from sufficient to fill one or more of the individual load carrying units to small quantities which occupy only part of one of such individual units. The load so carried is perfectly protected within each of the load carrying units particularly where the units are metal or plastics walled bins or pallets on rollers or wheels. Irrespective of the quantity of load carried in each individual unit, the load will not shift or be crushed or damaged during transportation.

Where different parts of a drop have to be maintained at different temperatures, the different parts can be loaded into different units for positioning in different ones of the lanes. The environment in each lane can be controlled according to the contents of the load therein.

Preferably refrigeration means and/or heating means and/or humidity controlling means is provided at the front end of the load carrying compartment and ducts or louvres and/or other airflow control means are provided to control the ingress of air into and egress of air from the various compartments.

To facilitate the loading and unloading of castor mounted bins or other load carrying units into the various sub-compartments, a tail-lift assembly may be provided at the rear of the vehicle for raising the units from the ground to the appropriate level at which they are to be rolled off into the sub-compartment and for lowering loads from the vehicle to the ground.

Alternatively a lift may be provided which is either moved up to the rear of the vehicle after the doors have been opened or up to which the vehicle can be reversed. The lift can have means for receiving one or more castor mounted bins or roll pallets or the like and for elevating or lowering the bins or other load carrying units to different heights and levels for loading and unloading.

To further facilitate the movement of castored bins or roll pallets or the like into and out of the various lanes in the vehicle body, drive means in the form of a conveyor system may be attached to the floor or to the walls or to the ceiling or to some or all of said surfaces within each sub-compartment. One form of conveyor system could be a so-called walking beam assembly provided on the floor of each lane for gripping and moving forward from the rear of the load carrying container each of the castored bins or roll pallets in turn and for forming a line of said bins or pallets within each lane. Preferably any such conveyor system is reversible in its action to shunt the line of bins or containers either forward or rearwards in the lane.

By sub-dividing the interior of a relatively large vehicle body with at least one horizontal deck and with at least one upright wall member between the deck and either the roof or the floor of the vehicle body, so the overall structure is strengthened and given increased rigidity. This is particularly the case where two upright walls are provided to divide the top deck and the lower deck each into three compartments and it is envisaged that the increase in weight brought about by the intermediate walls and intermediate flooring can be largely offset by the decrease in weight of the outer skin of the vehicle body the rigidity of which can now be determined by the intermediate walls and floors rather than the outer skin.

The internal upright walls and the internal deck preferably include, or are formed at least in part, from insulating material so as to allow different temperatures to exist in adjoining sub-compartments with minimal heat transfer therebetween.

- 9 -

Typically the rear of the vehicle body is closed by one or more doors typically a pair of doors meeting halfway across the rear end of the body.

Where the doors are hinged to the two upright sides of the exterior of the body, the hinges can allow the doors to be swung completely round to lie flush against the sides of the vehicle body well clear of the rear end face thereof to permit operation of a tail lift or use of a separate lift device mentioned before.

The invention may be applied to an articulated trailer or to a towed trailer or to an integral van including a driving compartment and power unit on the same chassis on which the vehicle body forming the load carrying compartment is carried.

The invention will now be described by way of example with reference to the accompanying drawings in which:-

Figure 1 is a side view in cross section of a load carrying container adapted to form part of an articulated lorry and embodying the invention;

Figure 2 is an end view of the container shown in Figure 1 where the doors have been swung fully round to expose the open rear end of the load carrying container;

Figure 3 is a similar view to that shown in Figure 2 in which the interior of the load carrying container is divided differently;

Figure 4 is a similar view to Figure 2 illustrating a still further alternative sub-division;

Figure 5 is a similar view to Figure 2 of yet another sub-division of the container;

Figure 6 is a perspective rear view of another vehicle body embodying the invention; and

Figure 7 shows a lift unit for use in loading the container.

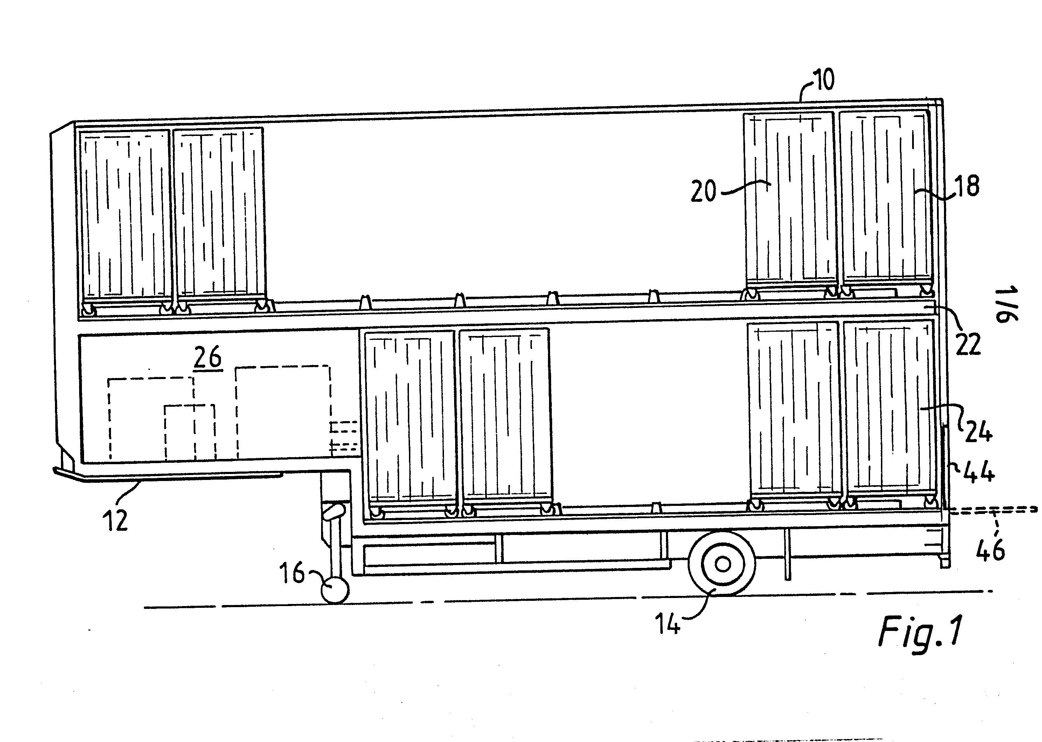

As shown in Figure 1, a generally rectilinear load carrying container 10 has a face 12 adapted to be mounted on a fifth wheel coupling of a power unit (not shown) and includes at least one set of road wheels 14 and a steadying jockey wheel 16 which can be raised clear of the road for transportation.

The container shown in Figure 1 is in cross section and illustrates the interior and shows how load carrying units such as generally designated 18 and 20 can be mounted on an intermediate or mezzanine floor 22 forming a so-called top deck whilst other units such as 24 are carried on the floor of the container in a so-called lower deck. Although the two decks have not been shown completely filled with load carrying units, it will be appreciated that units such as 20 and 18 can occupy the whole of the top deck and units such as 24 can occupy the whole of the lower deck.

Above the fifth wheel coupling the lower deck has a raised floor section which prevents full height load carrying units from traversing therein. This space designated by reference numeral 26 is filled with air conditioning, chilling and dehumidifying plant as required, together with filtration means and air duct and airflow control means for controlling the flow of air to and from the upper and lower decks. Details of the ducting and airflow all of which is known per se, are not shown in the drawing.

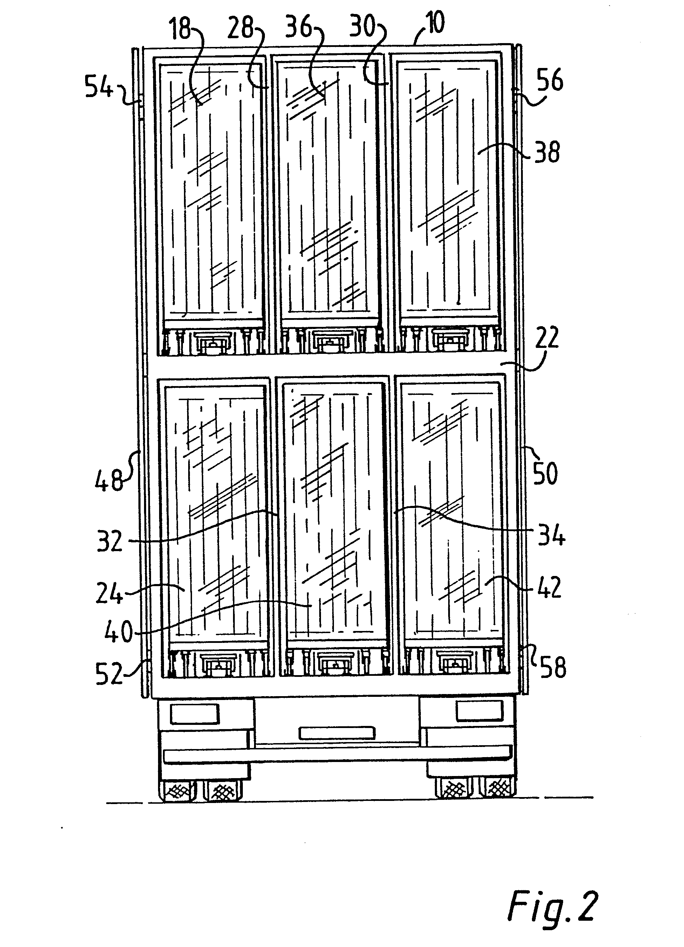

Figure 2 is a rear view of the container shown in Figure 1 and it will be seen that the container is not only divided into upper and lower decks but is also divided laterally into three lanes along both the upper and lower decks by means of upright walls 28 and 30 in the case of the upper deck and 32 and 34 in the case of the lower deck. The walls are of a thermally insulating material and together with a thermally insulating intermediate mezzanine floor 22 allow the different sub-compartments so formed to be maintained at different temperatures if so desired.

Each of the sub-compartments can be occupied by a complete line of load carrying units such as 18 and 20 and to this end the end unit 18 as shown in the upper line of units visible in Figure 1 can be seen in the top left-hand corner of the view shown in Figure 2 and the unit 24 in the lower left-hand corner. Units designated by reference numerals 36 and 38 occupy the end positions of the other rows in the top deck and units 40 and 42 occupy the end positions in the two other rows on the lower deck.

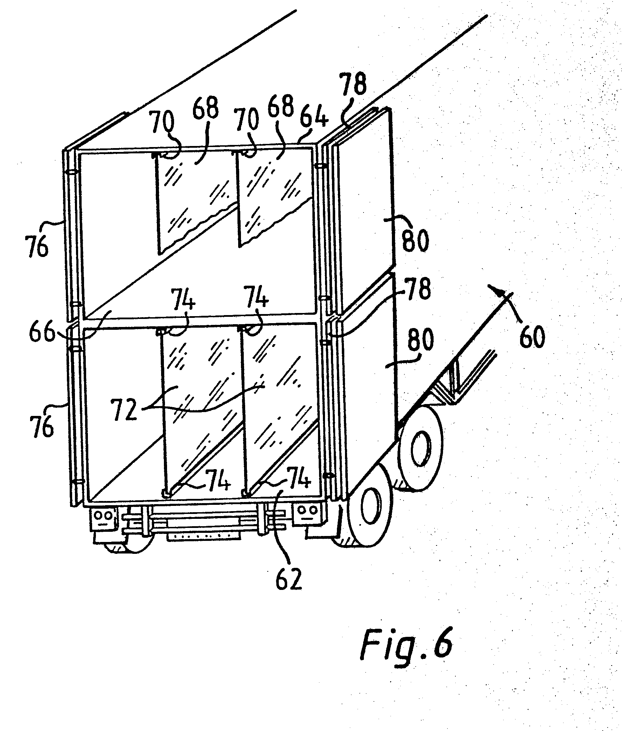

Figure 6 shows a vehicle 60 having a floor 62, a roof 64 and an intermediate horizontal floor 66. In the top deck above the floor 66, three parallel lanes which run the length of the vehicle 60 are separated from one another by suspended curtains 68. These curtains do not reach right down to the floor, but extend two thirds of the height of the upper deck. As can be seen, their lower edges hang free. The upper edges are suspended from tracks 70 so that the curtains can either be slid out of the way, or can be removed entirely.

In the lower deck, below the intermediate floor 66, curtains 72 are provided which are anchored, using suitable tracks 74, at their upper and lower edges.

For the sake of convenience, these two alternative curtain arrangements are shown on one lorry. Normally however, one lorry would have the same type of curtain arrangement both above and below the intermediate deck 66.

The use of curtains instead of rigid partitions is preferred where there is no requirement to control the environment in one lane relative to that in another. In such a case, the extra weight and expense of rigid partitions may be unnecessary. However, experience shows that when loaded roll pallets are placed in two side by side lanes, they tend to interfere with one another and this may prevent the pallet in one lane from being pushed past a pallet or pallets in another lane. This happens because, although the pallets are theoretically rigid structures, in practice when they are loaded their walls may bow out to a certain degree and this bowing may be sufficient to cause one pallet to interfere with another. This can happen even when guide tracks are laid down on the floor of the upper or lower compartment, as the case may be, to guide movement of the pallets.

The presence of the curtains 68 or 72 provides just sufficient separation between the pallets in adjacent lanes to prevent them interfering with one another.

Figure 6 also shows doors 76, 78 arranged so that there is a separate door, which can be separately opened, for each lane in the vehicle. On the left-hand side of the vehicle as seen in Figure 6, there are upper and lower doors 76 which respectively can be used to close the left-hand upper and lower lanes. On the right-hand side of the rear of the vehicle are doors 78 which in fact are double-fold doors, with door leaves 80 hinged to the free edge of the doors 78. The leaves 80 can be used to close the middle lanes on the upper and lower decks once the leaves 78 have closed the right-hand lanes.

Although not shown in detail, a transport mechanism in the form of a walking beam assembly is provided on the floor in each lane so that the units such as 18 and 20 can be moved fore and aft along each lane for loading and unloading the container.

A tail-gate lift which is normally stowed in an upright position as denoted by reference numeral 44, (Figure 1) but can be hinged down into a lower position as denoted by reference numeral 46, may be provided to lift units such as 18 and 20 from the ground to either the lower deck or the upper deck and may also be used to lower units from either of the upper or lower decks to the ground during unloading.

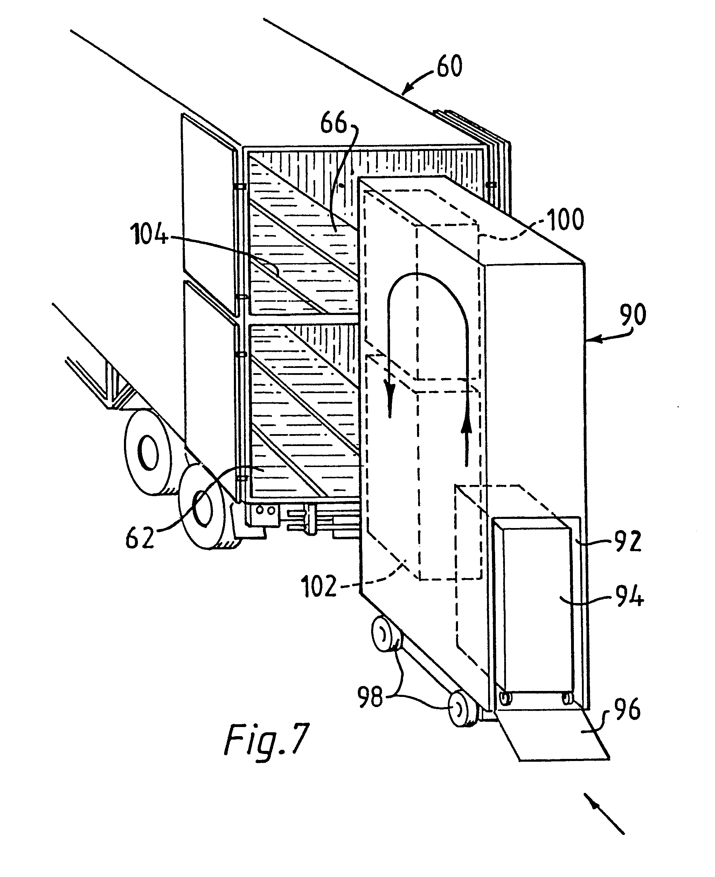

Figure 7 shows a remote lift 90 which is separate from the vehicle 60 which it is going to serve. The lift 90 will remain at the loading or unloading station. The lift consists of a housing with an opening 92 at the rear into which a roll pallet 94 can be introduced up a small ramp 96. The lift 90 has wheels 98 which enable it to be wheeled up to the rear of the vehicle 60. Alternatively,

- 14 -

the lift 90 could be stationary and the lorry could be backed up to register with the lift.

In Figure 7, the lift is shown as being the width of a single roll pallet but alternatively a lift could be constructed which would be equivalent in width to the width of the vehicle body 60.

Inside the lift 90 there is a mechanism (not shown in detail) which serves to lift the pallet 94 either to an upper position 100 where it is at the level of the intermediate floor 66, or to a lower position 102 where it is at the level of the floor 62. Once the pallet is at the correct level, it can usually be rolled out into the vehicle body, where it will be picked up on an appropriate conveyor 104 and moved into the interior of the vehicle. The mechanism inside the lift 90 may be a paternoster type of lift, or can be a direct lift.

The doors of the vehicle shown in Figures 2 to 5 are hinged as at 52, 54, 56 and 58 and can be swung on their hinges well clear of the rear end of the load carrying container so that either a tail-gate lift can be raised or lowered without obstruction or a separate lifting arrangement can be employed as described.

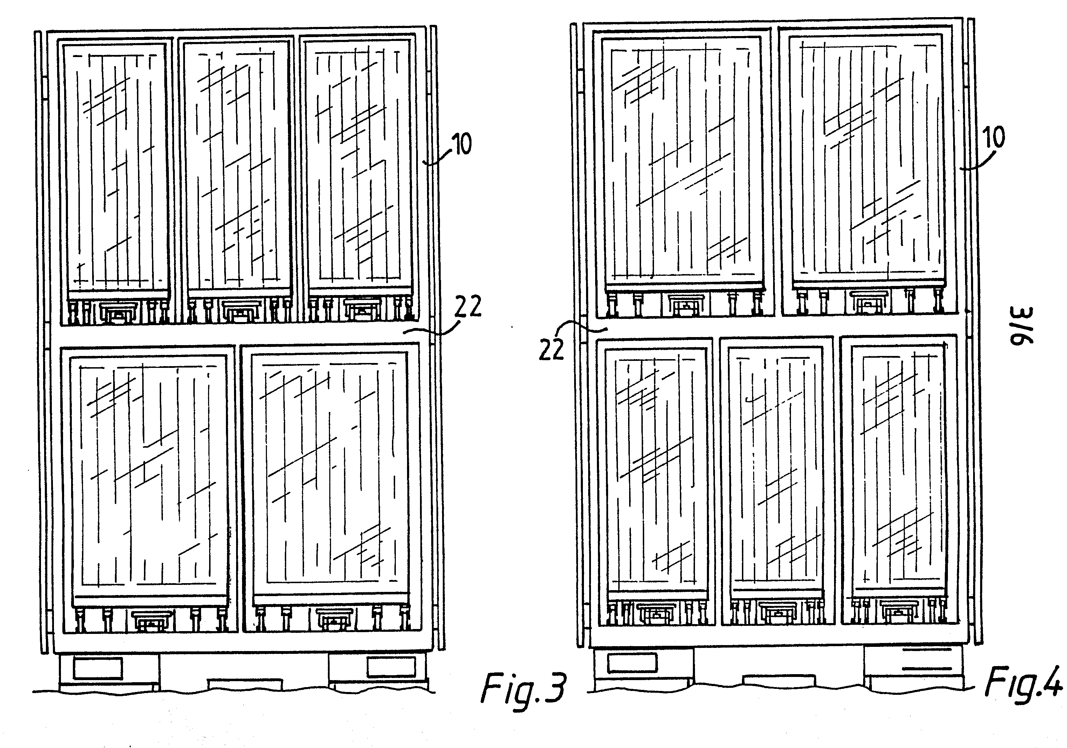

Figures 3, 4, and 5 illustrate alternative internal arrangements which may be preferred depending on the type of load carrying units which are to be carried within the overall container. Thus in Figure 3 the upper deck is divided into three equal lanes and the lower deck into two equal lanes which will accommodate larger individual load carrying units then the top deck, whilst in Figure 4 the top deck is divided into two lanes and the lower deck into three lanes.

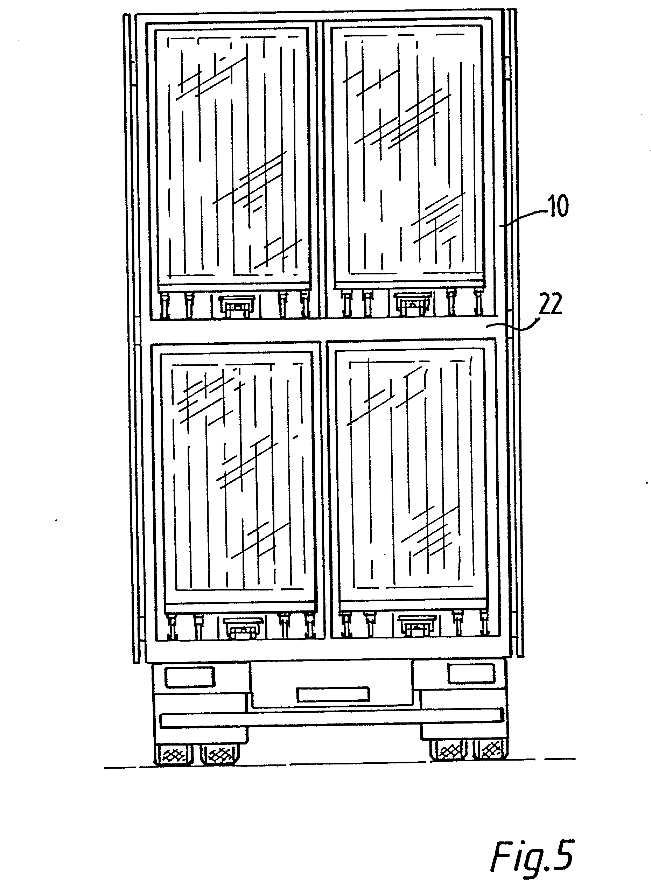

Figure 5 illustrates one further alternative in which the upper deck and lower deck are each divided into two lanes only.

It will be appreciated that the invention is not limited to any particular internal arrangement and it is envisaged that the invention will also apply to where the interior is divided into an upper and lower deck only and an arrangement in which either the upper or lower deck is divided by an upright intermediate wall.

The flooring and intermediate walls as well as the outer skin can be formed from thermally insulating material to restrict and reduce thermal loss between one sub-compartment and another and thereby allow different temperatures to be maintained in adjoining sub-compartments.

Although the invention has been shown by way of illustration in connection with the rear half of an articulated vehicle, it will be appreciated that the same considerations apply if the articulated load carrying container were to be replaced by a towable trailer having two road wheel axles or more or the load carrying container were to be mounted on an integral chassis having a cab and driving unit at the front end.

CLAIMS

1.  A vehicle body for a road goods vehicle, the body defining therein a volume for housing goods to be transported by the vehicle, characterised in that the body has an internal horizontal divider which divides the said volume into an upper load-housing compartment and a lower load-housing compartment.

2.  A vehicle body according to claim 1, further having one or more vertical dividers in at least one of the said compartments, to divide the compartment or compartments into a plurality of sub-compartments side-by-side.

3.  A vehicle body according to claim 2, in which the said vertical dividers are retractable, so that adjacent sub-compartments can be reversibly joined and separated.

4.  A vehicle body according to claim 2 or claim 3, in which the said vertical dividers depend from the top of the respective compartment and do not extend for the full height of the respective compartment.

5.  A vehicle body according to any one of claims 2 to 4, in which both the upper compartment and the lower compartment are divided into sub-compartments by said vertical dividers, the sub-compartments of the upper compartment being of a different width from the sub-compartments of the lower compartment.

6.  A vehicle body according to any one of claims 2 to 5 in which each said sub-compartment is in the form of a lane extending along the length of the body, each lane having a separate respective door in the body to close it off.

7. A vehicle body according to any of the preceding claims in which means is provided to control the environment in all or part of at least one of the said compartments.

8. A vehicle body according to claim 7, in which means is provided to control the evironment in all or part of each said compartment independently.

9. A vehicle body according to any one of claims 2 to 6 in which means is provided to control the environment in each sub-compartment independently of all of the others.

10. A vehicle body according to any one of the preceding claims, which has a lift means to raise and lower load items or load carrying units to and from the said compartments.

11. A lifting device for use with a road goods vehicle having a body according to any one of the preceding claims, the lifting device having means to raise and lower load items or load carrying units to and from the level of the said compartments.

12. A lifting device according to claim 11 which is movable and can be brought up to the said vehicle for use and moved away from the vehicle after use.

0196833

Fig.1

0196833

2/6

Fig.2

Fig.3

Fig.4

0196833

Fig.5

Fig.6

Fig.7